# EUROPEAN PATENT APPLICATION

(11) **EP 4 782 271 A1**
(43) Date of publication of application: **29.07.2026**
(21) Application number: 26153791.4
(22) Date of filing: 23.01.2026
(51) Int. Cl.: B60N 2/22, B60N 2/235, B60N 2/75

(54) **ANGLE ADJUSTER, SEAT AND SEAT ARMREST ADJUSTMENT METHOD**

(30) Priority: 23.01.2025 CN 202510116328
(71) Applicant: Faurecia (China) Holding Co., Ltd, Min Hang District Shanghai 201109 (CN)
(72) Inventor: XUE, Xiaoling, Shanghai (CN); XIANG, Lei, Shanghai (CN); ZHANG, Zhiwei, Shanghai (CN); CHEN, Zhitong, Shanghai (CN)
(74) Representative: Pfenning, Meinig & Partner mbB

(57) **Abstract**

The present disclosure provides an angle adjuster, a seat, and a seat armrest adjustment method. The angle adjuster includes: a fixed part; a rotating part rotatably connected to the fixed part; a reversing assembly for switching the angle adjuster to work in a first state or a second state, the reversing assembly including a cam, a locking member, and a first elastic member; the cam is provided with a protruding part and rotates under the drive of the rotating part; the locking member includes a driven block capable of abutting against the protruding part and is rotatably connected to the fixed part; the first elastic member presses the locking member toward the cam; in the first state, the driven block is separated from the protruding part, and the locking member locks the rotating part, so that the rotating part can only rotate in the forward direction and can be locked at any angle; in the second state, the driven block abuts against the protruding part, and the locking member releases the locking of the rotating part, so that the rotating part can rotate in the reverse direction.

## Description

### Field

The present disclosure relates to an angle adjuster, a seat, and a seat armrest adjustment method.

### Background

Nowadays, people pay more and more attention to meeting personalized needs. Taking seat armrests as an example, due to different body shapes and usage habits of different people, different people have different requirements for the inclination angle of seat armrests. Generally, angle adjusters adopting a ratchet-pawl mechanism that can only realize stepped adjustment, while stepless angle adjusters that is able to be locked at any angle within the adjustment range have higher adjustment precision, can better meet users' personalized needs, and bring a more comfortable use experience.

Therefore, there is a need in the art to continuously develop stepless angle adjusters.

### Summary

One purpose of the present disclosure is to provide an angle adjuster.

Another purpose of the present disclosure is to provide a seat.

Yet another purpose of the present disclosure is to provide a seat armrest adjustment method.

According to the first aspect of the present disclosure, an angle adjuster for adjusting the rotation angle of a second object relative to a first object includes: a fixed part fixedly connected to the first object; a rotating part fixedly connected to the second object and rotatably connected to the fixed part; a reversing assembly for switching the angle adjuster to work in a first state or a second state, the reversing assembly including a cam, a locking member, and a first elastic member; the cam is provided with a protruding part and rotates under the drive of the rotating part; the locking member includes a driven block capable of abutting against the protruding part and is rotatably connected to the fixed part; the first elastic member presses the locking member toward the cam; in the first state, the driven block is separated from the protruding part, and the locking member locks the rotating part, such that the rotating part is only able to provide a rotation in a forward direction and to be locked at any angle; in the second state, the driven block abuts against the protruding part, and the locking member releases the locking of the rotating part, such that the rotating part is able to rotate in a reverse direction.

It can be understood that angle adjusters usually have functions of angle adjustment and return, and need to switch between working states for realizing the two functions; when the angle adjuster works in the first state, the rotating part can rotate in the forward direction to any angle and be locked, that is, it has a stepless adjustment function, and has higher adjustment precision compared with stepped angle adjusters; when the angle adjuster works in the second state, the rotating part can rotate in the reverse direction to realize the return function. Compared with stepless angle adjusters of some compared solutions, the reversing assembly is used to switch the angle adjuster to work in the first state or the second state, such that the overall structure of the angle adjuster is simplified, the function is stable and reliable, and it is easy to process and manufacture with low cost.

In one or more embodiments, in the second state, the rotating part is also able to providing the rotation in the forward direction.

In one or more embodiments, the fixed part is provided with a limiting block for limiting a stroke of the rotating part rotating in the forward direction in the second state.

In one or more embodiments, the rotating part includes: a first rotating shaft; a first rotating member, one side of the inner circumference of which is provided with a first surface, and one side of the outer circumference of which is provided with a locking groove for cooperating with the locking member; a second rotating member, one side of the outer circumference of which is provided with a plurality of second surfaces and a plurality of third surfaces; a plurality of rolling members; a plurality of second elastic members; wherein the first rotating member is rotatably connected to the fixed part around the first rotating shaft; the cam and the second rotating member are fixedly connected to the first rotating shaft; the first surface, the plurality of second surfaces, and the plurality of third surfaces jointly define a plurality of accommodating spaces; one rolling member and one second elastic member are arranged in one accommodating space; the second surface is provided with a slope such that the gap between the second surface and the first surface has a size smaller than the diameter of the rolling member on one side; the two ends of the second elastic member are respectively connected to the rolling member and the third surface, so that the rolling member abuts against the slope.

In one or more embodiments, the locking member cooperates with the locking groove to lock the first rotating member and allow the second rotating member to only rotate in the forward direction; the locking member is separated from the locking groove to allow the first rotating member to rotate and the second rotating member to rotate in the forward direction or the reverse direction.

In one or more embodiments, the fixed part includes: a housing; a cover fixedly connected to the housing; wherein the housing and the cover jointly define a cavity for providing an installation position for the rotating part and the reversing assembly. In one or more embodiments, the fixed part is provided with a gasket in contact with the rotating part.

According to the second aspect of the present disclosure, a seat includes the angle adjuster according to the above embodiments, wherein the rotating part is fixedly connected to an armrest, and the fixed part is fixedly connected to a seat body. According to the third aspect of the present disclosure, a seat armrest adjustment method applicable to the seat according to the above embodiments includes: putting the angle adjuster in a first state;
driving the armrest to rotate in the forward direction to a desired angle between a first angle and a second angle;
driving the armrest to rotate in the forward direction to the second angle to put the angle adjuster in a second state;
driving the armrest to rotate in the reverse direction to the first angle to put the angle adjuster in the first state;
wherein the rotation direction from the lower side to the upper side is the forward direction, and the direction opposite to the forward direction is the reverse direction. In one or more embodiments, after driving the armrest to rotate in the forward direction to the second angle to put the angle adjuster in the second state, the armrest is driven to rotate in the forward direction to a third angle, and the third angle is an angle at which the armrest is parallel to the backrest of the seat.

### Description of attached drawings

The above and other features, properties, and advantages of the present disclosure will become more apparent through the following description in conjunction with the accompanying drawings and embodiments, where:
Figure 1 is an assembly schematic diagram of an angle adjuster according to an embodiment.
Figure 2 is an explosion schematic diagram of an angle adjuster according to an embodiment.
Figure 3 is a schematic diagram of an angle adjuster in a first state according to an embodiment.
Figure 4 is a schematic diagram of an angle adjuster in a second state according to an embodiment.
Figure 5 is a schematic diagram of an angle adjuster rotating in the forward direction in a second state according to an embodiment.
Figure 6 is a schematic diagram of an angle adjuster rotating in the reverse direction in a second state according to an embodiment.
Figure 7 is a schematic diagram of the return of an angle adjuster according to an embodiment.
Figure 8 is a flow chart of a seat armrest adjustment method according to an embodiment.

Reference Numerals:
1.Angle adjuster;
10.Fixed part; 11. Limiting block; 12. Housing; 13. Cover; 14. Gasket;
20.Rotating part; 21. First rotating shaft; 220. First rotating member; 221. First surface; 222. Locking groove; 230. Second rotating member; 231. Second surface; 232. Third surface; 24. Rolling member; 25. Second elastic member; 26. Accommodating space; 27. Slope;
30.Reversing assembly; 31. Cam; 32. Locking member; 33. First elastic member; 34. Protruding part; 35. Driven block; 36. Second rotating shaft;
2.Second object.

### Detailed Description of Embodiments

Hereinafter, embodiments of the technical solution of the present disclosure will be described in detail with reference to the drawings. And embodiments are merely used to more clearly explain the technical solution of the present disclosure, and therefore are merely examples, and should not limit the scope of protection of the present disclosure.

An "embodiment" means that a particular feature, structure, or characteristic described may be included in at least one embodiment of the present disclosure. The appearance of the word "embodiment" in various places in the specification does not necessarily refer to the same embodiment, nor refer to an independent or alternative embodiment that is mutually exclusive from other embodiments. It may be explicitly and implicitly understood by those skilled in the art that the embodiments described herein may be combined with other embodiments.

In the following description, orientation terms such as "upper", "lower", "inner", "outer", "front", "rear" indicate the orientation or positional relationship based on the orientation or positional relationship shown in the drawings, which is only for the convenience of describing the present application and simplifying the description, and does not indicate or imply that the apparatus or part referred to must have a specific orientation, be constructed and/or operated in a specific orientation, so it cannot be understood as a limitation to the present application. In the present application, terms such as "first" and "second" are only used for distinguishing descriptions, and cannot be understood as indicating or implying positional relationships or order of importance.

It can be understood that flowcharts are used in the present disclosure to illustrate operations performed by the system according to embodiments of the present disclosure. It should be understood that, depending on the actual situation, the preceding or following operations are not necessarily performed precisely in order. One can also add additional steps to these procedures, or remove a step or steps from them.

As introduced above, there is a need in the art to continuously develop stepless angle adjusters. Considering that some compared solutions of certain types of stepless angle adjusters have problems such as complex structure, low strength of parts, easy to be damaged leading to functional failure, difficult to manufacture and process, and high cost, the inventors provide an angle adjuster to solve at least one of the above technical problems.

It can be understood that the angle adjuster provided by the present disclosure is suitable for adjusting the angle of automobile seat armrests, but not limited thereto. It can also be applied to scenes where the rotation angle of other objects is adjustable, such as the angle adjustment of screens, the angle adjustment of seat headrests, etc.

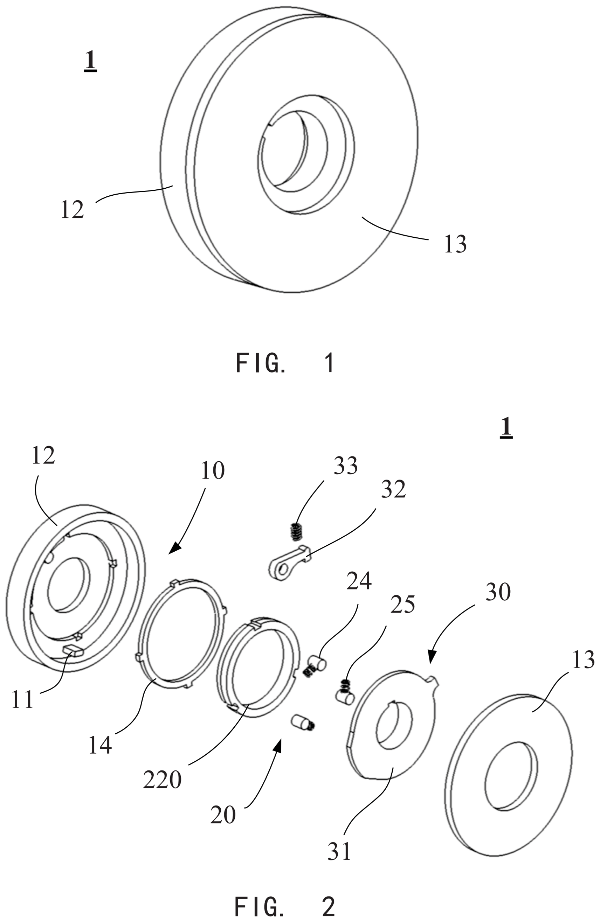

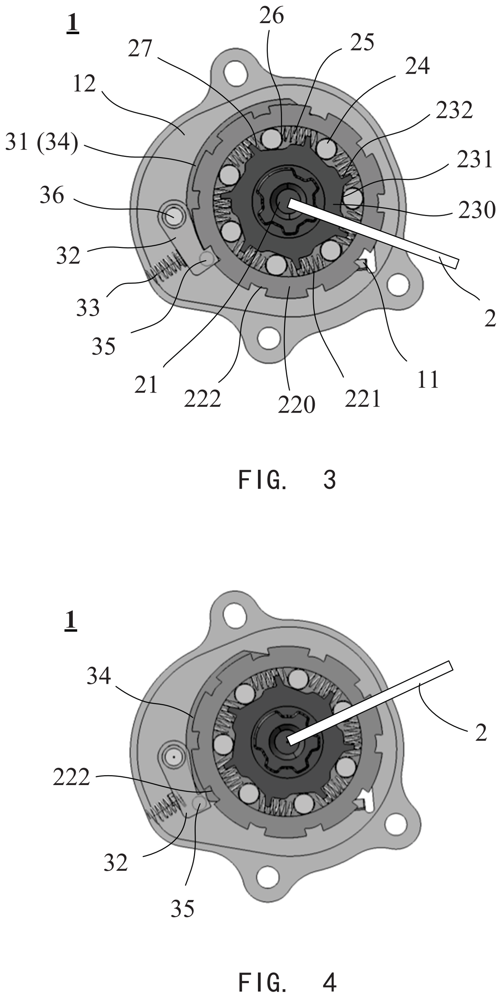

Referring to Figures 1 to 7, according to an aspect of the present disclosure, an angle adjuster 1 for adjusting the rotation angle of a second object 2 relative to a first object includes: a fixed part 10 fixedly connected to the first object; a rotating part 20 fixedly connected to the second object 2 and rotatably connected to the fixed part 10; a reversing assembly 30 for switching the angle adjuster 1 to work in a first state or a second state, the reversing assembly including a cam 31, a locking member 32, and a first elastic member 33; the cam 31 is provided with a protruding part 34 and rotates under the drive of the rotating part 20; the locking member 32 includes a driven block 35 capable of abutting against the protruding part 34 and is rotatably connected to the fixed part 10; the first elastic member 33 presses the locking member 32 toward the cam 31. In the first state, the driven block 35 does not abut against the protruding part 34, so that the locking member 32 locks the rotating part 20, and the rotating part 20 can only rotate in the forward direction and can be locked at any angle. In the second state, the driven block 35 abuts against the protruding part 34, so that the locking member 32 releases the locking of the rotating part 20, and the rotating part 20 can rotate in the reverse direction. In some embodiments, the first object and the second object 2 can be a screen base and a screen, a seat backrest and an armrest, or a seat backrest and a headrest, etc.; in the present disclosure, the term "forward direction" refers to the rotation direction provided by the angle adjuster 1 during stepless adjustment, and the "reverse direction" is the direction opposite to the forward direction; for example, in Figures 3 to 7, the forward direction is the counterclockwise direction, and the reverse direction is the clockwise direction.

It can be understood that angle adjusters usually have the functions of angle adjustment and return, and need to switch between working states for realizing the two functions; when the angle adjuster 1 works in the first state, the rotating part 20 can rotate in the forward direction to any angle and be locked, that is, it has a stepless adjustment function, and has higher adjustment precision compared with stepped angle adjusters; when working in the second state, the rotating part 20 can rotate in the reverse direction to realize the return function; compared with existing stepless angle adjusters, the reversing assembly 30 is used to switch the angle adjuster 1 to work in the first state or the second state, the switching effect is stable, and the overall structure of the angle adjuster 1 is simplified and reasonable, the adjustment function is stable and reliable, and it is easy to process and manufacture with low cost.

As shown in Figures 2 and 3, in some embodiments, the angle adjuster 1 can be used to adjust the relative rotation angle between the first object and the second object 2, the fixed part 10 is fixedly connected to the first object, and the rotating part 20 is fixedly connected to the second object 2; the cam 31 can be a disc cam, and the locking member 32 is radially arranged on one side of the outer circumference of the cam 31; the cam 31 and the rotating part 20 can be arranged coaxially, and they do not rotate relative to each other; the first elastic member 33 abuts between the locking member 32 and the fixed part 10 to enable the locking member 32 to return; when the cam 31 rotates with the rotating part 20 and the driven block 35 abuts against the protruding part 34, the locking member 32 is pushed out, so that the locking effect of the locking member 32 on the rotating part 20 is released; and when the driven block 35 does not abut against the protruding part 34 and the locking member 32 returns, the locking member 32 can re-lock the rotating part 20 as the rotating part 20 rotates.

In one or more embodiments, in the second state, the rotating part 20 can also rotate in the forward direction; which expands the angle range for the angle adjustment of the angle adjuster 1.

In some embodiments, the protruding part 34 of the cam 31 has a certain length for keeping the locking member 32 in the pushed-out position; which avoids an unwanted return of the locking member 32 to restrict the rotating part 20 when the rotating part 20 rotates in the forward direction in the second state.

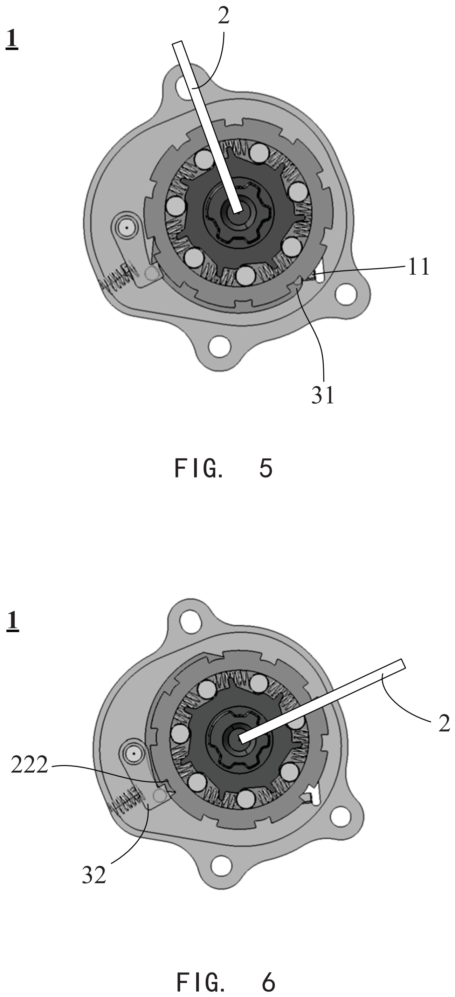

As shown in Figures 3 and 5, in one or more embodiments, the fixed part 10 is provided with a limiting block 11 for limiting the stroke of the rotating part 20 rotating in the forward direction in the second state.

It can be understood that the rotating part 20 rotates relative to the fixed part 10, and the limiting block 11 fixedly arranged on the fixed part 10 can be used to limit the stroke of the rotating part 20. In addition, since the second object 2, the cam 31, etc. rotate synchronously with the rotating part 20, the limiting block 11 can also act on the second object 2 or the cam 31; the limiting block 11 can be used to prevent excessive forward rotation of the rotating part 20. In addition, the limiting block 11 can also be used to keep the rotating part 20 at a specific angle of forward rotation, for example, the limiting block 11 is provided with a third elastic member that can clamp the rotating part 20 to enable it to be clamped at a certain angle, and the rotating part 20 can be separated by overcoming the elastic force of the third elastic member, but not limited thereto. Employing the limiting block 11 to limit the stroke of the rotating part 20 rotating in the forward direction in the second state not only is able to prevent excessive rotation of the rotating part 20 but also to add an angle adjustment stage of the angle adjuster 1.

As shown in Figures 3 to 7, in one or more embodiments, the rotating part 20 includes: a first rotating shaft 21; a first rotating member 220, one side of an inner circumference of which is provided with a first surface 221, and one side of an outer circumference of which is provided with a locking groove 222 for cooperating with the locking member 32; a second rotating member 230, one side of the outer circumference of which is provided with a plurality of second surfaces 231 and a plurality of third surfaces 232; a plurality of rolling members 24; a plurality of second elastic members 25; wherein the first rotating member 220 is rotatably connected to the fixed part 10 around the first rotating shaft 21; the cam 31 and the second rotating member 230 are fixedly connected to the first rotating shaft 21; the first surface 221, the plurality of second surfaces 231, and the plurality of third surfaces 232 jointly define a plurality of accommodating spaces 26; one rolling member 24 and one second elastic member 25 are arranged in one accommodating space 26; the second surface 231 is provided with a slope 27 such that a gap between the second surface 231 and the first surface 221 is smaller than the diameter of the rolling member 24 on one side; the two ends of the second elastic member 25 are respectively connected to the rolling member 24 and the third surface 232 to make the rolling member 24 abut against the slope 27; the locking member 32 cooperates with the locking groove 222 to prevent the first rotating member 220 from rotating and allow the second rotating member 230 to only rotate in the forward direction; the locking member 32 is separated from the locking groove 222 to allow the first rotating member 220 to rotate and the second rotating member 230 to rotate in the forward direction or the reverse direction. In some embodiments, the first surface 221 can be annular; there can be a plurality of locking grooves 222; the rolling members can be spherical or cylindrical, etc.; the gap between the first surface 221 and the second surface 231 should have a portion with a size not smaller than the diameter of the rolling member to accommodate the rolling member 24; the third surface can extend radially outward; the locking member 24 can be rotatably connected to the fixed part 10 through a second rotating shaft 36. It can be understood that the angle adjuster 1 can freely rotate bidirectionally in the second state, and can optionally rotate in the reverse direction to return to the first state at one time, or optionally continue to rotate in the forward direction to make the second object stop at a third angle, so as to achieve another angle adjustment gear outside the angle adjustment range of the stepless adjustment function.

The structure of the rotating part 20 enables switching between two rotation modes: one-way rotation and two-way rotation. In other words, it can not only realize rotation in the forward direction in the first state for stepless adjustment, but also realize rotation in the reverse direction in the second state for return, and is able to continue to rotate in the forward direction in the second state to make the rotating part 20 reach an additional angle adjustment stage, with a simplified structure, high strength, good bearing performance, and high rotation stability.

In one or more embodiments, the outer circumference of the first rotating member 220 is uniformly provided with no less than 3 locking grooves 222; in some embodiments, as shown in Figures 3 to 7, the number of locking grooves 222 is 10; this structure is suitable for adjusting the angle of seat armrests and can provide an ideal angle adjustment range for stepless adjustment.

In one or more embodiments, the number of rolling members 24 is no less than 3, which makes the structure have high strength, good bearing performance, and more stable rotation; in some embodiments, as shown in Figures 3 to 7, the number of rolling members 24 is 7.

As shown in Figure 1, in one or more embodiments, the fixed part 10 includes: a housing 12; a cover 13 fixedly connected to the housing 12; wherein the housing 12 and the cover 13 jointly define a cavity for providing an installation position for the rotating part 20 and the reversing assembly 30. In some embodiments, the limiting block 11 is arranged on the housing 12; the housing can also be provided with a connecting structure for connecting with the first object.

As shown in Figure 2, in one or more embodiments, the fixed part 10 is provided with a gasket 14 in contact with the rotating part 20. In some embodiments, the gasket 14 is made of POM plastic; in some embodiments, the gasket 14 is arranged between the first rotating member 220 and the housing 12; the gasket is conducive to providing lubrication between the rotating part 20 and the fixed part 10, and can ensure the installation and positioning of the rotating part 20 in the fixed part 10, avoiding direct contact between the housing 12 and the like and the rotating part 20, improving the service life and reducing maintenance costs.

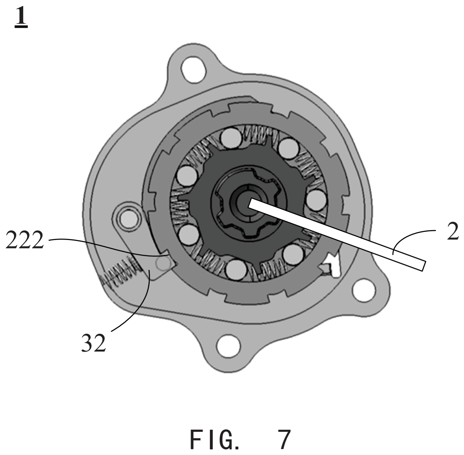

Referring to Figures 3 to 7, in one or more embodiments, the working process of the angle adjuster 1 is as follows: as shown in Figure 3, when the second object 2 is at the first angle, the locking member 32 falls into the locking groove 222, that is, the angle adjuster 1 is in the first state. At this time, the first rotating member 220 cannot rotate relative to the fixed part 10, and the first surface 221, the slope 27, the rolling member 24, the second elastic member 25, etc. in the accommodating space 26 form a one-way check structure. The second rotating member 230 can only rotate in the forward direction (i.e., the counterclockwise direction shown in the figure). Driving the second rotating member 230 in the reverse direction will wedge the rolling member 24 into a gap between the first surface 221 and the slope 27, generating great resistance to lock the rotation in the reverse direction; when the second object 2 continues to rotate in the forward direction and the driven block 35 does not abut against the protruding part 34, the angle adjuster 1 is still in the first state. At this time, the angle adjuster 1 can be locked at the desired angle as needed to realize stepless adjustment; as shown in Figure 4, when the second object 2 rotates in the forward direction to the second angle, the driven block 35 abuts against the protruding part 34 to separate the locking member 32 from the locking groove 222, and the angle adjuster 1 enters the second state. At this time, the first rotating member 220 can rotate relative to the fixed part 10, making the check structure in the accommodating space 26 invalid. The second rotating member 230 can rotate in the forward direction or the reverse direction, and the first rotating member 220 can rotate synchronously with the second rotating member 230 under the friction of the rolling member 24 and the like; as shown in Figure 5, when the second object 2 continues to rotate in the forward direction to the third angle, the rotating part 20 or the cam 31 stops rotating under the action of the limiting block 11; as shown in Figure 6, when the angle adjuster 1 is in the second state and the second object 2 rotates in the reverse direction to the second angle, the locking member 32 overlaps and can slide over the side wall of the previously separated locking groove 222; as shown in Figure 7, when the second object 2 continues to rotate in the reverse direction to the first angle in the second state, the locking member 32 falls into another locking groove 222 adjacent to the previously separated locking groove 222. At this time, the second object 2 returns to the original position, and the angle adjuster 1 re-enters the first state. The term "desired angle" refers to an angle that meets the use needs, for example, an angle at which the armrest to be used comfortably in seat armrest adjustment.

According to the second aspect of the present disclosure, a seat includes the angle adjuster 1 according to the above embodiments, wherein the rotating part 20 is fixedly connected to an armrest, and the fixed part 10 is fixedly connected to a seat body; the seat body refers to the part of the seat different from the armrest, for example, the fixed part can be fixedly connected to the backrest or the frame of the seat cushion.

In some embodiments, the forward direction is the rotation direction from the lower side to the upper side, that is, the rotation direction from the seat cushion to the backrest; it can be understood that at this time, the initial angle of the armrest, that is, the first angle, is on the lower side of the second angle. The armrest is rotated upward in a stepless-adjustment way to a desired angle between the first angle and the second angle, and rotated upward to the second angle to put the angle adjuster 1 into the second state for return, etc.; which provides a good user experience and can prevent the armrest from falling due to gravity.

In one or more embodiments, when the angle adjuster 1 is in the second state, the armrest can rotate in the forward direction and stop rotating at the third angle, which is an angle at which the armrest is parallel to the backrest of the seat; which enables the armrest to be stored on the side of the backrest, forming a large space for the user to pass through.

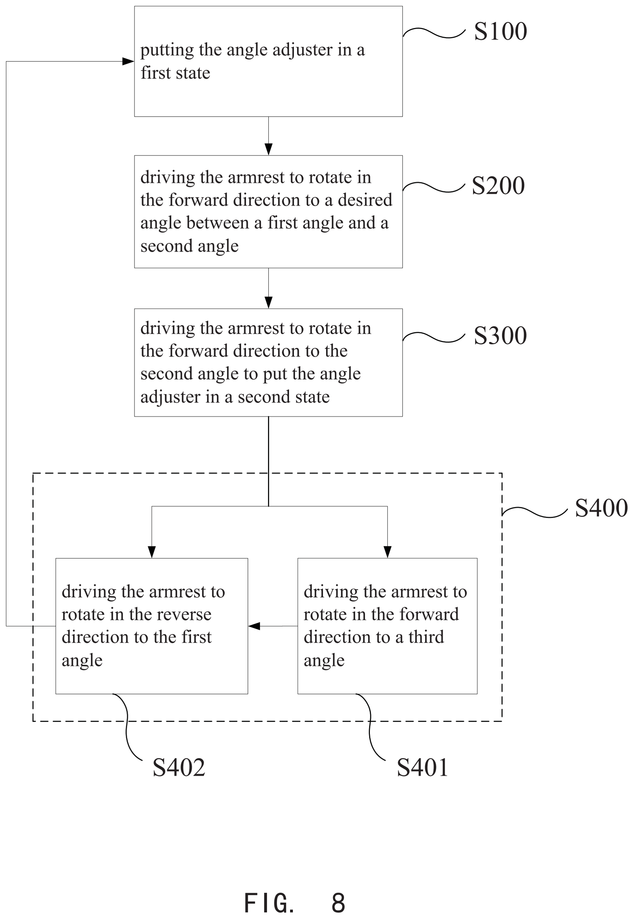

Referring to Figure 8, according to a third aspect of the present disclosure, a seat armrest adjustment method employing the seat according to the above embodiments includes:
S 100. Putting the angle adjuster in a first state;
S200. Driving the armrest to rotate in the forward direction to a desired angle between a first angle and a second angle;
S300. Driving the armrest to rotate in the forward direction to the second angle to put the angle adjuster in a second state;
S400. Driving the armrest to rotate in the reverse direction to the first angle, and then returning to step S100;
wherein the rotation direction from the lower side to the upper side is the forward direction, and the direction opposite to the forward direction is the reverse direction; the desired angle is an angle that meets the use needs.

In one or more embodiments, the step S400 includes:
S401. Driving the armrest to rotate in the forward direction to a third angle, which is an angle at which the armrest is parallel to the backrest of the seat;
S402. Driving the armrest to rotate in the reverse direction to the first angle, and then returning to step S100.

It can be understood that in the embodiment where the angle adjuster 1 can rotate bidirectionally in the second state, it can be directly rotated in the reverse direction to return to the initial first angle; or, it can be first rotated in the forward direction to the third angle, and then rotated in the reverse direction to the first angle when return is needed.

In summary, the technical effects of the present disclosure include but are not limited to at least one of the following:
1.When the angle adjuster works in the first state, the rotating part can rotate in the forward direction to any angle and be locked, that is, it has a stepless adjustment function, and has higher adjustment precision compared with stepped angle adjusters; when working in the second state, the rotating part can rotate in the reverse direction to realize the return function; compared with existing stepless angle adjusters, the reversing assembly is used to switch the angle adjuster to work in the first state or the second state, the switching effect is stable, and the overall structure of the angle adjuster is simplified and reasonable, the adjustment function is stable and reliable, and it is easy to process and manufacture with low cost.
2.The rotating part can realize the switching between two rotation modes: one-way rotation and bidirectional rotation. In other words, it can not only rotate in the forward direction in the first state for stepless adjustment but also rotate in the reverse direction in the second state for return, and can continue to rotate in the forward direction in the second state to make the rotating part reach an additional angle adjustment gear. The structure is simplified, the strength is high, the bearing effect is good, and the rotation stability is high.

Although the present disclosure is disclosed as above with embodiments, it is not intended to limit the present disclosure. Any person skilled in the art can make possible changes and modifications without departing from the spirit and scope of the present disclosure. Therefore, any modification, equivalent change, and modification made to the above embodiments according to the technical essence of the present disclosure without departing from the content of the technical solution of the present disclosure shall fall within the scope defined by the claims of the present disclosure.

## Claims

1. An angle adjuster (1) for adjusting a rotation angle of a second object (2) relative to a first object, **characterized in that** it comprises:
a fixed part (10) fixedly connected to the first object;
a rotating part (20) fixedly connected to the second object (2) and rotatably connected to the fixed part (10);
a reversing assembly (30) for switching the angle adjuster (1) to work in a first state or a second state, the reversing assembly including a cam (31), a locking member (32), and a first elastic member (33); the cam (31) being provided with a protruding part (34) and being able to rotate under the driving of the rotating part (20); the locking member (32) including a driven block (35) capable of abutting against the protruding part (34) and being rotatably connected to the fixed part (10); the first elastic member (33) being able to press the locking member (32) toward the cam (31);
wherein, in the first state, the driven block (35) is separated from the protruding part (34), and the locking member (32) locks the rotating part (20), such that the rotating part (20) is only able to provide a rotation in a forward direction and is able to be locked at any angle;
in the second state, the driven block (35) abuts against the protruding part (34), and the locking member (32) releases the locking of the rotating part (20), such that the rotating part (20) is able to provide a rotation in a reverse direction.

2. The angle adjuster (1) according to claim 1, **characterized in that** in the second state, the rotating part (20) is also able to provide the rotation in the forward direction.

3. The angle adjuster (1) according to claim 2, **characterized in that** the fixed part (10) is provided with a limiting block (11), limiting a stroke of the rotating part (20) rotating in the forward direction in the second state.

4. The angle adjuster (1) according to claim 1, **characterized in that** the rotating part (20) comprises:
a first rotating shaft (21);
a first rotating member (220), one side of an inner circumference of which is provided with a first surface (221), and one side of an outer circumference of which is provided with a locking groove (222) for cooperating with the locking member (32);
a second rotating member (230), one side of an outer circumference of which is provided with a plurality of second surfaces (231) and a plurality of third surfaces (232);
a plurality of rolling members (24);
a plurality of second elastic members (25);
wherein the first rotating member (220) is rotatably connected to the fixed part (10) around the first rotating shaft (21); the cam (31) and the second rotating member (230) are fixedly connected to the first rotating shaft (21); the first surface (221), the plurality of second surfaces (231), and the plurality of third surfaces (232) jointly define a plurality of accommodating spaces (26); one rolling member (24) and one second elastic member (25) are arranged in one accommodating space (26); the second surface (231) is provided with a slope (27) such that a gap between the second surface (231) and the first surface (221) has a size smaller than a diameter of the rolling member (24) on one side; and each of two ends of the second elastic member (25) is respectively connected to the rolling member (24) and the third surface (232), such that the rolling member (24) abuts against the slope (27).

5. The angle adjuster (1) according to claim 4, **characterized in that** when the locking member (32) cooperates with the locking groove (222), to lock the first rotating member (220) and allow the second rotating member (230) to only rotate in the forward direction; when the locking member (32) is separated from the locking groove (222), to allow the first rotating member (220) to rotate and the second rotating member (230) to rotate in the forward direction or the reverse direction.

6. The angle adjuster (1) according to claim 1, **characterized in that** the fixed part (10) comprises:
a housing (12);
a cover (13) fixedly connected to the housing (12);
wherein the housing (12) and the cover (13) jointly define a cavity for providing an installation position for the rotating part (20) and the reversing assembly (30).

7. The angle adjuster (1) according to claim 1, **characterized in that** the fixed part (10) is provided with a gasket (14) in contact with the rotating part (20).

8. A seat, **characterized in that** it comprises the angle adjuster (1) according to any one of claims 1 to 7, wherein the rotating part (20) is fixedly connected to an armrest, and the fixed part (10) is fixedly connected to a seat body.

9. A seat armrest adjustment method, **characterized in that** it is applicable to the seat according to claim 8, and the adjustment method comprises:
putting the angle adjuster (1) in a first state;
driving the armrest to rotate in the forward direction to a desired angle between a first angle and a second angle;
driving the armrest to rotate in the forward direction to the second angle to put the angle adjuster (1) in a second state;
driving the armrest to rotate in the reverse direction to the first angle to put the angle adjuster (1) in the first state;
wherein the rotation direction from the lower side to the upper side is the forward direction, and the direction opposite to the forward direction is the reverse direction.

10. The seat armrest adjustment method according to claim 9, **characterized in that** after driving the armrest to rotate in the forward direction to the second angle to put the angle adjuster (1) in the second state, the armrest is driven to rotate in the forward direction to a third angle, and the third angle is an angle at which the armrest is parallel to the backrest of the seat.
